# EUROPEAN PATENT SPECIFICATION

(11) **EP 3 258 539 B1**
(45) Date of publication and mention of the grant of the patent: **24.07.2019**
(21) Application number: 15888209.2
(22) Date of filing: 10.04.2015
(51) Int. Cl.: H01Q 1/38, H01Q 5/30, H04B 1/04

(54) **MULTI-FREQUENCY ANTENNA AND TERMINAL DEVICE**
MEHRFREQUENZANTENNE UND ENDGERÄTEVORRICHTUNG
ANTENNE À FRÉQUENCES MULTIPLES ET DISPOSITIF TERMINAL

(43) Date of publication of application: 20.12.2017
(73) Proprietor: Huawei Technologies Co. Ltd., Shenzhen, Guangdong 518129 (CN)
(72) Inventor: ZHAO, Chongfeng, Shenzhen Guangdong 518129 (CN); HUYAN, Silei, Shenzhen Guangdong 518129 (CN); LU, Bao, Shenzhen Guangdong 518129 (CN); LU, Shiqiang, Shenzhen Guangdong 518129 (CN); WANG, Yi, Shenzhen Guangdong 518129 (CN); LI, Kun, Shenzhen Guangdong 518129 (CN)
(74) Representative: Gill Jennings & Every LLP
(86) International application number: PCT/CN2015/076367
(87) International publication number: WO 2016/161653

(56) References cited:
- EP-A1- 2 787 574
- WO-A1-2014/046691
- CN-A- 1 407 832
- CN-A- 102 315 513
- CN-A- 104 396 086
- TW-A- 200 937 734
- US-A1- 2009 256 763
- US-A1- 2012 019 428
- US-A1- 2014 342 676
- US-A1- 2014 342 676

## Description

### TECHNICAL FIELD

Embodiments of the present invention relate to antenna technologies, and in particular, to a multi-band antenna and a terminal device.

### BACKGROUND

With development of wireless communications technologies, an increasingly large quantity of functions are integrated into a terminal device for wireless communication, and for functions in which wireless communication needs to be performed, a particular wireless band needs to be used to perform wireless communication. Therefore, a terminal device needs to cover more bands, and more antennas need to be disposed for the terminal device. Consequently, the terminal device needs to occupy larger antenna space.

However, due to requirements of users for portability and aesthetic appearance of products, terminal devices are developed to be lighter and thinner. Therefore, an antenna space for a terminal device becomes increasingly small instead. Conventional antennas for a terminal device mainly include an inverted F antenna (Inverted F Antenna, IFA), a monopole (Monopole) antenna, a loop antenna, and the like. Multiple bands of the foregoing antennas are achieved mainly by increasing a quantity of branches or by increasing a quantity of parasitic elements. However, the foregoing antennas need relatively long cabling space, and when the quantity of branches is increased or the quantity of parasitic elements is increased, larger space is occupied.

Based on the above, for terminal devices for wireless communication, a contradiction between miniaturization of antennas and requirements for multiple bands becomes increasingly severe, how to implement a miniaturized multi-band antenna is a trend of the technologies to resolve such a contradiction.

CN 104 396 086 relates to antenna and mobile terminal.

### SUMMARY

Embodiments of the present invention provide a multi-band antenna and a terminal device, to provide multiple resonance frequencies while reducing an antenna size.

In particular, the present disclosure provides a multi-band antenna according to claim 1 and a terminal device according to claim 7. Further technical features of each of these aspects are defined in the respective dependent claims.

According to the multi-band antenna and the terminal device provided in the embodiments, a capacitor assembly and a matching network are disposed between a feedpoint and a radiation portion, to enable the multi-band antenna to generate two resonance frequencies, where one resonance frequency is used in a CRLH mode, so that two resonance frequencies can be provided on the basis of reducing an antenna size, and therefore, the multi-band antenna can adapt to a miniaturized terminal device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1A is a schematic diagram of a basic form of a Monopole antenna;
FIG. 1B is a schematic diagram of a Monopole antenna with a parasitic element;
FIG. 2A is a schematic diagram of a basic form of an IFA antenna;
FIG. 2B is a schematic diagram of an IFA antenna with a parasitic element;
FIG. 3A is a schematic diagram of a basic form of a loop antenna;
FIG. 3B is a schematic diagram of a loop antenna with a parasitic element;
FIG. 4 is a schematic structural diagram of Embodiment 1 of a multi-band antenna according to an embodiment of the present invention;
FIG. 5A to FIG. 5D show specific structures of several types of matching networks;
FIG. 6 is a schematic structural diagram of Embodiment 2 of a multi-band antenna according to an embodiment of the present invention;
FIG. 7A is a schematic diagram of a radiation portion being a section of a metal frame of a terminal device;
FIG. 7B is a schematic diagram of a radiation portion being a section of a metal back cover of a terminal device; and
FIG. 8 is a schematic structural diagram of Embodiment 1 of a terminal device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

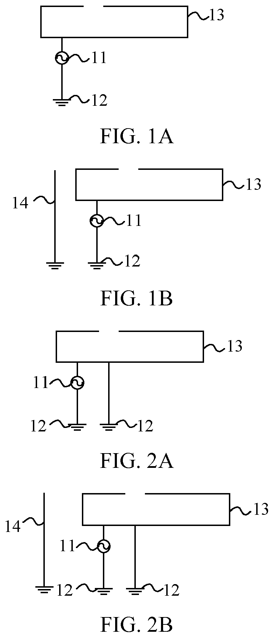

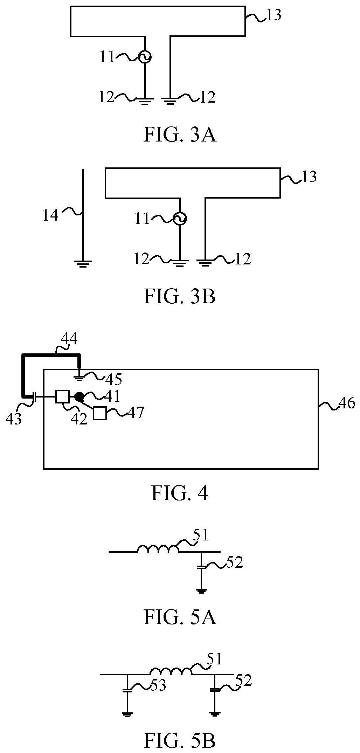

An increasingly large quantity of functions are integrated into a terminal device, but the terminal device provides a limited space for an antenna. Therefore, a miniaturized multi-band antenna that can provide multiple resonance frequencies is needed to be disposed in the terminal device. At present, antennas in the terminal device mainly include several types, namely, an IFA loop antenna, a Monopole loop antenna, and a loop antenna. FIG. 1A is a schematic diagram of a basic form of a Monopole antenna. FIG. 1B is a schematic diagram of a Monopole antenna with a parasitic element. FIG. 2A is a schematic diagram of a basic form of an IFA antenna. FIG. 2B is a schematic diagram of an IFA antenna with a parasitic element. FIG. 3A is a schematic diagram of a basic form of a loop antenna. FIG. 3B is a schematic diagram of a loop antenna with a parasitic element. In FIG. 1A to FIG. 3B, a feedpoint 11 is a feed terminal of an antenna, a grounding portion 12 is a ground terminal of the antenna, a radiation portion 13 is a radiation terminal of the antenna, and a parasitic element 14 is a parasitic element of the antenna.

For the antennas shown in FIG. 1A to FIG. 3B, the antennas need a relatively large cabling space, and the parasitic elements that are added to add bands need to occupy an additional antenna space as well. Therefore, the antennas cannot adapt to a current miniaturization trend.

To resolve the foregoing problem that the multi-band antenna needs to occupy a relatively large cabling space in the terminal device, a multi-band antenna that is designed based on a composite right/left handed (Composite Right/Left Handed, CRLH) and a terminal device in which the antenna based on CRLH is applied are provided in the embodiments of the present invention.

FIG. 4 is a schematic structural diagram of Embodiment 1 of a multi-band antenna provided in an embodiment of the present invention. As shown in FIG. 4, the multi-band antenna in this embodiment includes: a feedpoint 41, a matching network 42, a capacitor assembly 43, a radiation portion 44, and a grounding portion 45.

The feedpoint 41, the matching network 42, the capacitor assembly 43, the radiation portion 44, and the grounding portion 45 are connected in sequence. The feedpoint 41, the matching network 42, the capacitor assembly 43, the radiation portion 44, and the grounding portion 45 may be directly connected to one another, or may be connected separately by using a section of a feeder.

The matching network 42 includes at least a serially-connected inductor and a grounded capacitor or inductor. The grounding portion 45 is electrically connected to a ground plane 46. A first resonant circuit is formed from the feedpoint 41 to the grounding portion 46. The first resonant circuit generates a first resonance frequency and a second resonance frequency. The first resonance frequency is used in a CRLH mode. The second resonance frequency is used in a half-wavelength loop mode.

The feedpoint 41, the radiation portion 44, and the grounding portion 45 form a basic antenna structure. After the matching network 42 and the capacitor assembly 43 are added, the first resonant circuit is formed from the feedpoint 41 to the grounding portion 46 presents a CRLH characteristic, and the first resonant circuit generates the first resonance frequency that is used in the CRLH mode. Meanwhile, due to existence of the matching network 42, the second resonance frequency is excited on the first resonant circuit, and the second resonance frequency is used in the half-wavelength loop mode. Based on an existing antenna type, a length from an antenna feedpoint to a grounding portion or an open-circuit terminal is generally a half or a quarter of a wavelength corresponding to a resonance frequency of the antenna. However, according to a CRLH principle, it is known that an antenna length needed by an antenna that satisfies the CRLH principle is less than a quarter of the wavelength corresponding to the resonance frequency of the antenna, and is generally 0.12 to 0.18 times as large as the wavelength corresponding to the resonance frequency of the antenna. Therefore, for the multi-band antenna provided in this embodiment, a length of the antenna from the feedpoint 41 to the grounding portion 45 can be shortened, so that an antenna space needed by the multi-band antenna can be reduced. Furthermore, due to existence of the matching network 42, the second resonance frequency is excited on the first resonant circuit, and neither a branch nor a parasitic element is added on the antenna, that is, the multi-band antenna provided in this embodiment generates two resonance frequencies without increasing an antenna space occupied by the antenna.

An effect of the capacitor assembly 43 is to couple a current between the matching network 42 and the radiation portion 44. The capacitor assembly 43 may be a lumped capacitor, or may be a distributed capacitor. If the capacitor assembly 43 is a lumped capacitor, a lumped capacitor device having a determined capacitance value can be connected (for example, in a manner of welding) between the matching network 42 and the radiation portion 44. If the capacitor assembly 43 is a distributed capacitor, a particular gap is reserved between the matching network 42 and the radiation portion 44. The gap presents a distributed capacitance characteristic. A capacitance value of the distributed capacitor can be adjusted by adjusting a width of the gap between the matching network 42 and the radiation portion 44.

The multi-band antenna provided in this embodiment is disposed in a terminal device that needs to be operated in multiple wireless bands, where a feed radio frequency circuit 47 is further included in the terminal device, and the feed radio frequency circuit 47 is configured to process a radio-frequency signal that is received by the multi-band antenna or transmit a generated radio-frequency signal by using the multi-band antenna. In addition, the ground plane 46 that is grounded is further disposed in the terminal device, and the ground plane 46 is generally coated copper on a circuit card of the terminal device, for example, a layer of copper plane layer on the circuit board.

The radiation portion 44 may be any section of a metal device having a particular length. For example, a section of a microstrip on the circuit board of the terminal device, a section of a metal piece of a front cover of the terminal device, a section of a metal frame of the terminal device, a part of a metal back cover of the terminal device or the like. In the embodiment shown in FIG. 4, the radiation portion 44 that is a section of the metal piece of the front cover of the terminal device is used as an example. A particular gap that is reserved between the matching network 42 and the metal piece of the front cover of the terminal device is used as the capacitor assembly 43, and a section of the metal piece of the front cover of the terminal device from the gap to the grounding portion 45 is used as the radiation portion 44, thereby forming the multi-band antenna.

According to the multi-band antenna provided in this embodiment, the capacitor assembly and the matching network are disposed between the feedpoint and the radiation portion, to enable the multi-band antenna to generate two resonance frequencies, where one resonance frequency is used in a CRLH mode, so that the antenna can provide two resonance frequencies on the basis of reducing an antenna size, so as to enable the multi-band antenna can adapt to a miniaturized terminal device.

Furthermore, in the multi-band antenna shown in FIG. 4, there are multiple forms of the matching networks 42, as long as the matching network 42 includes at least one serially-connected inductor and at least one grounded inductor or capacitor. FIG. 5A to FIG. 5D show specific structures of several types of matching networks, but the matching network in the multi-band antenna provided in this embodiment of the present invention is not limited thereto.

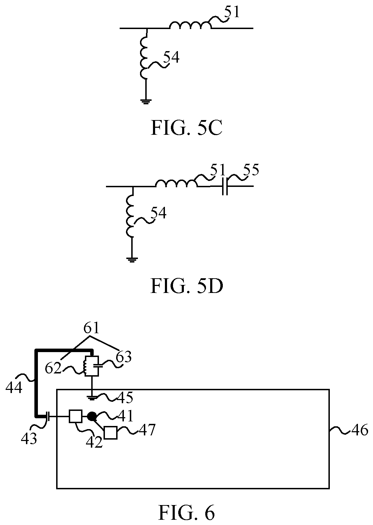

As shown in FIG. 5A to FIG. 5D, in FIG. 5A, the matching network includes a serially-connected second inductor 51 and a grounded second capacitor 52. In FIG. 5B, the matching network includes the serially-connected second inductor 51, the grounded second capacitor 52, and a grounded third capacitor 53. In FIG. 5C, the matching network includes the serially-connected second inductor 51 and a grounded third inductor 54. In FIG. 5D, the matching network includes the serially-connected second inductor 51, a serially-connected fourth capacitor 55, and the grounded third inductor 54.

A second resonance frequency may be adjusted by adjusting inductance values of the inductors and capacitance values of the capacitors in the matching network. In the matching network, an inductance value of a serially-connected inductor and a capacitance value of a parallelly-connected capacitor or an inductance value of an inductor are inversely proportional to the second resonance frequency. That is, if a value of each inductor or capacitor in the matching network is increased, the second resonance frequency drifts towards a low frequency.

FIG. 6 is a schematic structural diagram of Embodiment 2 of a multi-band antenna provided in an embodiment of the present invention. As shown in FIG. 6, based on the multi-band antenna shown in FIG. 4, the multi-band antenna in this embodiment further includes a filtering network 61.

The filtering network 61 is located between the radiation portion 44 and the grounding portion 45. The filtering network 61 is a parallel LC band-stop filtering network. As shown in FIG. 6, the filtering network 61 includes at least a parallelly-connected first inductor 62 and a parallelly-connected first capacitor 63.

Due to existence of the filtering network 61, a second resonant circuit is formed from a feed 41 to a grounding portion 45, and the second resonant circuit generates three resonance frequencies, that is, a third resonance frequency, a fourth resonance frequency, and a fifth resonance frequency. That is, the filtering network 61 excites an additional resonance frequency based on the multi-band antenna provided in the embodiment shown in FIG. 4. The third resonance frequency and the fifth resonance frequency are used in a CRLH mode, and the fourth resonance frequency is used in a half-wavelength loop mode.

Because the filtering network is added, based on the multi-band antenna shown in FIG. 4, when the filtering network 61 is equivalent to an inductor, the first resonance frequency drifts towards the low frequency, to form the third resonance frequency. When the filtering network 61 is equivalent to a capacitor, the first resonance frequency drifts towards the low frequency, to form the fifth resonance frequency. When the filtering network 61 is equivalent to a large capacitor for the second resonance frequency, the filtering network 61 has little impact on the second resonance frequency, and the fourth resonance frequency is formed.

According to the multi-band antenna provided in this embodiment, the capacitor assembly and the matching network are disposed between the feedpoint and the radiation portion and the filtering network is disposed between the radiation portion and the grounding portion, the multi-band antenna generates three resonance frequencies, where two resonance frequencies are used in a CRLH mode, so that the antenna can provide three resonance frequencies on the basis of reducing an antenna size, and therefore, the multi-band antenna can adapt to a miniaturized terminal device.

It should be noted that, in the multi-band antenna shown in FIG. 6, the first inductor in the filtering network 61 is a lumped inductor element. Optionally, the first inductor 62 may be a section of a transmission wire, and the transmission wire becomes the first inductor 62 by presenting a distributed inductance characteristic.

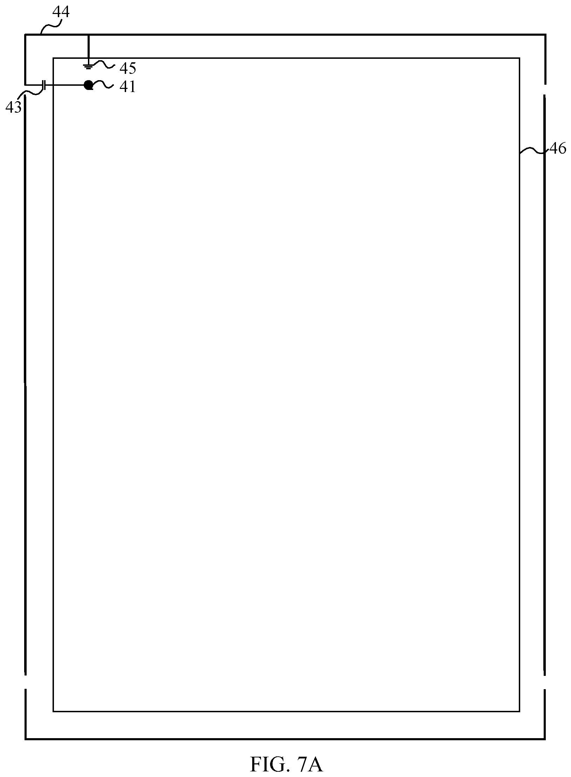

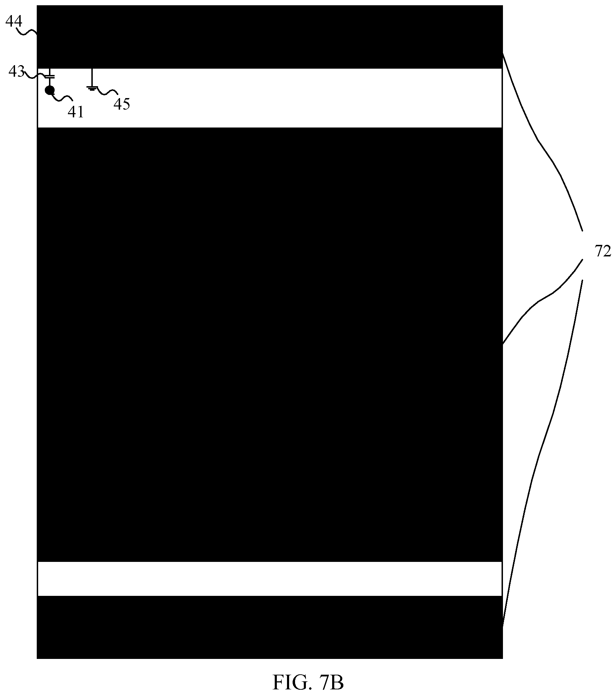

For a multi-band antenna shown in FIG. 4 and FIG. 6, only an implementation manner in which a radiation portion is a section of a metal piece of a front cover of a terminal device is shown. However, the multi-band antenna provided in this embodiment of the present invention is not limited thereto. FIG. 7A shows a case in which a radiation portion is a section of a metal frame of a terminal device, and FIG. 7B shows a case in which a radiation portion is a part of a metal back cover of a terminal device. As shown in FIG. 7A, FIG. 7A is a schematic diagram of a radiation portion that is a section of a metal frame of a terminal device. In FIG. 7A, only a feedpoint 41, a capacitor assembly 43, a radiation portion 44, and a grounding portion 45 are shown, but a matching network 42 and a filtering network 61 are not shown. The terminal device includes a metal frame 71. As can be seen from the figure, the radiation portion 44 is implemented by using a section of the metal frame. As shown in FIG. 7B, FIG. 7B is a schematic diagram of a radiation portion that is a part of a metal back cover of a terminal device. In FIG. 7B, only a feedpoint 41, a capacitor assembly 43, a radiation portion 44, and a grounding portion 45 are shown, but a matching network 42 and a filtering network 61 are not shown. The terminal device includes a metal back cover 72. As can be seen from the figure, the radiation portion 44 is implemented by using a part of the metal back cover.

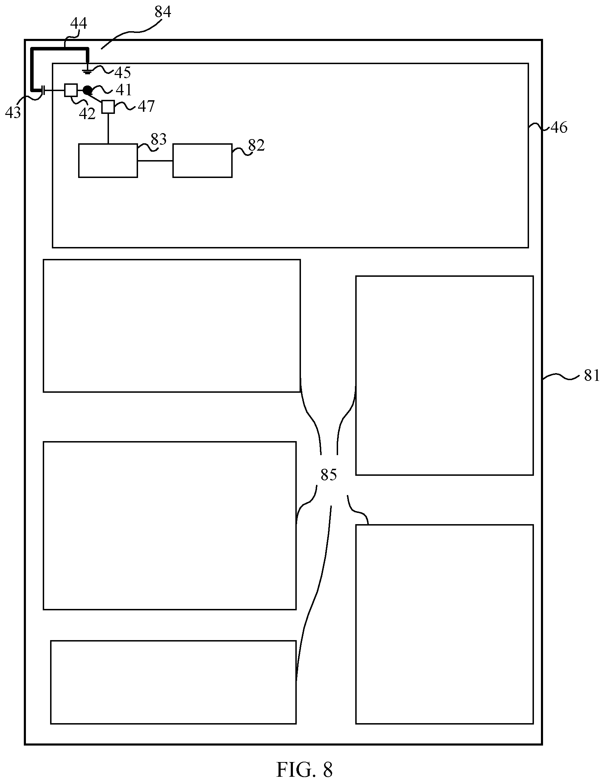

FIG. 8 is a schematic structural diagram of Embodiment 1 of a terminal device provided in an embodiment of the present invention. As shown in FIG. 8, the terminal device in this embodiment includes: a housing 81, a baseband processing circuit 82, a frequency mixing circuit 83, a feed radio frequency circuit 47, and a multi-band antenna 84. The baseband processing circuit 82, the frequency mixing circuit 83, the feed radio frequency circuit 47, and the multi-band antenna 84 are located inside the housing. There may also be another device 85 inside the housing 81.

The feed radio frequency circuit 47 is configured to process a radio-frequency signal that is received by the multi-band antenna 84 and send the processed signal to the frequency mixing circuit 83 for down-conversion processing. The frequency mixing circuit 83 performs down-conversion to obtain an intermediate frequency signal and sends the obtained intermediate frequency signal to the baseband processing circuit 82 for processing. Alternatively, the baseband processing circuit 82 sends a baseband signal to the frequency mixing circuit 83 for up-conversion to obtain a radio-frequency signal, the frequency mixing circuit 83 then sends the radio-frequency signal to the feed radio frequency circuit 47, and the signal is transmitted by using the multi-band antenna 84.

The terminal device shown in this embodiment may be any portable terminal device that needs to perform wireless communication, for example, a mobile phone or a tablet computer. The multi-band antenna 84 may be any multi-band antenna in the embodiment shown in FIG. 4 or FIG. 6. For a specific structure and an implementation principle of the multi-band antenna 84, reference may be made to the multi-band antenna in the embodiment shown in FIG. 4 or FIG. 6, and details are not described herein again.

In the terminal device provided in this embodiment, a used multi-band antenna satisfies a CRLH principle, so that a space needed by the antenna can be reduced. In an implementation manner of the terminal device provided in this embodiment, to implement a double resonance antenna of Global Positioning System (Global Positioning System, GPS) and Wireless-Fidelity (WIreless-Fidelity, WIFI), a cabling space of approximately 65 mm² is needed. If an IFA antenna or a Monopole antenna is used to implement a double resonance antenna of GPS and WIFI, a cabling space of approximately 85 mm² is needed. As can be seen, use of the terminal device provided in this embodiment further adapts to a design miniaturization trend.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

## Claims

1. A multi-band antenna, comprising a feedpoint (41), a matching network (42), a capacitor assembly (43), a radiation portion (44), and a grounding portion (45), wherein
the feedpoint (41), the matching network (42), the capacitor assembly (43), the radiation portion (44), and the grounding portion (45) are connected in sequence; and
the matching network (42) comprises at least a serially-connected inductor and a grounded capacitor or inductor, the grounding portion (45) is electrically connected to a ground plane (46), a first resonant circuit is formed from the feedpoint to the grounding portion, the first resonant circuit generates a first resonance frequency and a second resonance frequency, the first resonance frequency is used in a composite right/left hand, CRLH mode, and the second resonance frequency is used in a half-wavelength loop mode;
wherein a filtering network (61) is further comprised between the radiation portion (44) and the grounding portion (45), wherein
the filtering network (61) is a parallel LC band-stop filtering network; and
a second resonant circuit is formed from a feed to the grounding portion, the second resonant circuit generates a third resonance frequency, a fourth resonance frequency, and a fifth resonance frequency, the third resonance frequency and the fifth resonance frequency are used in the CRLH mode, and the fourth resonance frequency is used in the half-wavelength loop mode.

2. The multi-band antenna according to claim 1, wherein the filtering network (61) comprises a first inductor (62) and a first capacitor (63) that are connected in parallel.

3. The multi-band antenna according to claim 1 or 2, wherein the matching network (42) comprises a serially-connected second inductor (51) and a grounded second capacitor (52), or the matching network (42) comprises a serially-connected second inductor (51), a grounded second capacitor (52), and a grounded third capacitor (53), or the matching network (42) comprises a serially-connected second inductor (51) and a grounded third inductor (54), or the matching network (42) comprises a serially-connected second inductor (51), a serially-connected fourth capacitor (55), and a grounded third inductor (54).

4. The multi-band antenna according to any one of claims 1 to 3, wherein in the matching network (42), an inductance value of a serially-connected inductor and a capacitance value of a parallelly-connected capacitor or an inductance value of an inductor are inversely proportional to the second resonance frequency.

5. The multi-band antenna according to any one of claims 1 to 4, wherein the capacitor assembly is a lumped capacitor; or a gap is provided between the matching network (42) and the radiation portion (44), and the gap is a capacitor assembly presenting a distributed capacitance characteristic.

6. The multi-band antenna according to any one of claims 1 to 5, wherein the radiation portion (44) is a microstrip on a printed circuit board of a terminal device; or the radiation portion (44) is a section of a metal piece of a front cover of a terminal device; or the radiation portion (44) is a section of a metal frame of a terminal device; or the radiation portion (44) is a part of a metal back cover of a terminal device.

7. A terminal device, comprising: a housing (81), a baseband processing circuit (82), a frequency mixing circuit (83), a feed radio frequency circuit (47), and a multi-band antenna (84), wherein the baseband processing circuit (82), the frequency mixing circuit (83), the feed radio frequency circuit (47), and the multi-band antenna (84) are located inside the housing (81), the baseband processing circuit (82), the frequency mixing circuit (83), and the feed radio frequency circuit (47) are connected, and the multi-band antenna (84) comprises:
a feedpoint (41), a matching network (42), a capacitor assembly (43), a radiation portion (44), and a grounding portion (45), wherein
the feedpoint (41), the matching network (42), the capacitor assembly (43), the radiation portion (44), and the grounding portion (45) are connected in sequence; and
the matching network (42) comprises at least a serially-connected inductor and a grounded capacitor or inductor, the grounding portion (45) is electrically connected to a ground plane (46), a first resonant circuit is formed from the feedpoint to the grounding portion, the first resonant circuit generates a first resonance frequency and a second resonance frequency, the first resonance frequency is used in a composite right/left hand, CRLH mode, and the second resonance frequency is used in a half-wavelength loop mode;
wherein a filtering network (61) is further comprised between the radiation portion (44) and the grounding portion (45), wherein
the filtering network is a parallel LC band-stop filtering network; and
a second resonant circuit is formed from a feed to the grounding portion (45), the second resonant circuit generates a third resonance frequency, a fourth resonance frequency, and a fifth resonance frequency, the third resonance frequency and the fifth resonance frequency are used in the CRLH mode, and the fourth resonance frequency is used in the half-wavelength loop mode.

8. The terminal device according to claim 7, wherein the filtering network (61) comprises a first inductor (62) and a first capacitor (63) that are connected in parallel.

9. The terminal device according to claim 7 or 8, wherein the matching network comprises a serially-connected second inductor (51) and a grounded second capacitor (52), or the matching network (42) comprises a serially-connected second inductor (51), a grounded second capacitor (52), and a grounded third capacitor (53), or the matching network (42) comprises a serially-connected second inductor (51) and a grounded third inductor (54), or the matching network (42) comprises a serially-connected second inductor (51), a serially-connected fourth capacitor (55), and a grounded third inductor (54).

10. The terminal device according to any one of claims 7 to 9, wherein in the matching network (42), an inductance value of a serially-connected inductor and a capacitance value of a parallelly-connected capacitor or an inductance value of an inductor are inversely proportional to the second resonance frequency.

11. The terminal device according to any one of claims 7 to 10, wherein the capacitor assembly is a lumped capacitor; or a gap is provided between the matching network (42) and the radiation portion (44), and the gap is a capacitor assembly presenting a distributed capacitance characteristic.

12. The terminal device according to any one of claims 7 to 11, wherein the radiation portion (44) is a microstrip on a printed circuit board of the terminal device; or the terminal device comprises a metal piece of a front cover, and the radiation portion (44) is a section of the metal piece of the front cover; or the housing comprises a metal frame, and the radiation portion (44) is a section of the metal frame; or the terminal device comprises a metal back cover, and the radiation portion (44) is a part of the metal back cover.

## Patentansprüche

1. Mehrfrequenzantenne, umfassend einen Einspeisepunkt (41), ein Anpassungsnetzwerk (42), eine Kondensatoranordnung (43), einen Strahlungsabschnitt (44) und einen Erdungsabschnitt (45), wobei der Einspeisepunkt (41), das Anpassungsnetzwerk (42), die Kondensatoranordnung (43), der Strahlungsabschnitt (44) und der Erdungsabschnitt (45) in Reihe verbunden sind; und
das Anpassungsnetzwerk (42) mindestens einen seriell angeschlossenen Induktor und einen geerdeten Kondensator oder Induktor umfasst, der geerdete Abschnitt (45) elektrisch mit einer Masseebene (46) verbunden ist, ein erster Schwingkreis vom Einspeisepunkt zum Erdungsabschnitt gebildet wird, der erste Schwingkreis eine erste Resonanzfrequenz und eine zweite Resonanzfrequenz erzeugt, die erste Resonanzfrequenz in einem "Composite-Right/Left-Hand"-Modus, CRLH, verwendet wird und die zweite Resonanzfrequenz im Loop-Modus halber Wellenlänge verwendet wird;
wobei ferner ein Filternetzwerk (61) zwischen dem Strahlungsabschnitt (44) und dem Erdungsabschnitt (45) umfasst ist, wobei
das Filternetzwerk (61) ein paralleles LC-Bandsperrfilternetzwerk ist; und
ein zweiter Schwingkreis von einer Einspeisung zum Erdungsabschnitt gebildet wird, der zweite Schwingkreis eine dritte Resonanzfrequenz, eine vierte Resonanzfrequenz und eine fünfte Resonanzfrequenz erzeugt, die dritte Resonanzfrequenz und die fünfte Resonanzfrequenz im CRLH-Modus verwendet werden und die vierte Resonanzfrequenz im Loop-Modus halber Wellenlänge verwendet wird.

2. Mehrfrequenzantenne nach Anspruch 1, wobei das Filternetzwerk (61) einen ersten Induktor (62) und einen ersten Kondensator (63) umfasst, die parallel angeschlossen sind.

3. Mehrfrequenzantenne nach Anspruch 1 oder 2, wobei das Anpassungsnetzwerk (42) einen seriell angeschlossenen zweiten Induktor (51) und einen geerdeten zweiten Kondensator (52) umfasst oder das Anpassungsnetzwerk (42) einen seriell angeschlossenen zweiten Induktor (51), einen geerdeten zweiten Kondensator (52) und einen geerdeten dritten Kondensator (53) umfasst oder das Anpassungsnetzwerk (42) einen seriell angeschlossenen zweiten Induktor (51) und einen geerdeten dritten Induktor (54) umfasst oder das Anpassungsnetzwerk (42) einen seriell angeschlossenen zweiten Induktor (51), einen seriell angeschlossenen vierten Kondensator (55) und einen geerdeten dritten Induktor (54) umfasst.

4. Mehrfrequenzantenne nach einem der Ansprüche 1 bis 3, wobei im Anpassungsnetzwerk (42) ein Induktanzwert eines seriell angeschlossenen Induktors und ein Kapazitätswert eines parallel angeschlossenen Kondensators oder ein Induktanzwert eines Induktors umgekehrt proportional zur zweiten Resonanzfrequenz sind.

5. Mehrfrequenzantenne nach einem der Ansprüche 1 bis 4, wobei die Kondensatoranordnung ein zusammengefasster Kondensator ist; oder ein Spalt zwischen dem Anpassungsnetzwerk (42) und dem Strahlungsabschnitt (44) bereitgestellt ist und der Spalt eine Kondensatoranordnung ist, die eine verteilte Kapazitätscharakteristik aufweist.

6. Mehrfrequenzantenne nach einem der Ansprüche 1 bis 5, wobei der Strahlungsabschnitt (44) ein Mikrostreifen auf einer Leiterplatte einer Endgeräteeinrichtung ist; oder der Strahlungsabschnitt (44) ein Bereich eines Metallstücks einer vorderen Abdeckung einer Endgeräteeinrichtung ist; oder der Strahlungsabschnitt (44) ein Bereich eines Metallrahmens einer Endgeräteeinrichtung ist; oder der Strahlungsabschnitt (44) ein Teil einer hinteren Metallabdeckung einer Endgeräteeinrichtung ist.

7. Endgeräteeinrichtung, umfassend: ein Gehäuse (81), eine Basisbandverarbeitungsschaltung (82), eine Frequenzmischschaltung (83), eine Hochfrequenzeinspeiseschaltung (47) und eine Mehrfrequenzantenne (84), wobei die Basisbandverarbeitungsschaltung (82), die Frequenzmischschaltung (83), die Hochfrequenzeinspeiseschaltung (47) und die Mehrfrequenzantenne (84) innerhalb des Gehäuses (81) positioniert sind, die Basisbandverarbeitungsschaltung (82), die Frequenzmischschaltung (83) und die Hochfrequenzeinspeiseschaltung (47) verbunden sind und die Mehrfrequenzantenne (84) umfasst:
einen Einspeisepunkt (41), ein Anpassungsnetzwerk (42), eine Kondensatoranordnung (43), einen Strahlungsabschnitt (44) und einen Erdungsabschnitt (45), wobei
der Einspeisepunkt (41), das Anpassungsnetzwerk (42), die Kondensatoranordnung (43), der Strahlungsabschnitt (44) und der Erdungsabschnitt (45) in Reihe verbunden sind; und
das Anpassungsnetzwerk (42) mindestens einen seriell angeschlossenen Induktor und einen geerdeten Kondensator oder Induktor umfasst, der geerdete Abschnitt (45) elektrisch mit einer Masseebene (46) verbunden ist, ein erster Schwingkreis vom Einspeisepunkt zum Erdungsabschnitt gebildet wird, der erste Schwingkreis eine erste Resonanzfrequenz und eine zweite Resonanzfrequenz erzeugt, die erste Resonanzfrequenz in einem "Composite-Right/Left-Hand"-Modus, CRLH, verwendet wird und die zweite Resonanzfrequenz im Loop-Modus halber Wellenlänge verwendet wird;
wobei ferner ein Filternetzwerk (61) zwischen dem Strahlungsabschnitt (44) und dem Erdungsabschnitt (45) umfasst ist, wobei
das Filternetzwerk ein paralleles LC-Bandsperrfilternetzwerk ist; und
ein zweiter Schwingkreis von einer Einspeisung zum Erdungsabschnitt (45) gebildet wird, der zweite Schwingkreis eine dritte Resonanzfrequenz, eine vierte Resonanzfrequenz und eine fünfte Resonanzfrequenz erzeugt, die dritte Resonanzfrequenz und die fünfte Resonanzfrequenz im CRLH-Modus verwendet werden und die vierte Resonanzfrequenz im Loop-Modus halber Wellenlänge verwendet wird.

8. Endgeräteeinrichtung nach Anspruch 7, wobei das Filternetzwerk (61) einen ersten Induktor (62) und einen ersten Kondensator (63) umfasst, die parallel angeschlossen sind.

9. Endgeräteeinrichtung nach Anspruch 7 oder 8, wobei das Anpassungsnetzwerk einen seriell angeschlossenen zweiten Induktor (51) und einen geerdeten zweiten Kondensator (52) umfasst oder das Anpassungsnetzwerk (42) einen seriell angeschlossenen zweiten Induktor (51), einen geerdeten zweiten Kondensator (52) und einen geerdeten dritten Kondensator (53) umfasst oder das Anpassungsnetzwerk (42) einen seriell angeschlossenen zweiten Induktor (51) und einen geerdeten dritten Induktor (54) umfasst oder das Anpassungsnetzwerk (42) einen seriell angeschlossenen zweiten Induktor (51), einen seriell angeschlossenen vierten Kondensator (55) und einen geerdeten dritten Induktor (54) umfasst.

10. Endgeräteeinrichtung nach einem der Ansprüche 7 bis 9, wobei im Anpassungsnetzwerk (42) ein Induktanzwert eines seriell angeschlossenen Induktors und ein Kapazitätswert eines parallel angeschlossenen Kondensators oder ein Induktanzwert eines Induktors umgekehrt proportional zur zweiten Resonanzfrequenz sind.

11. Endgeräteeinrichtung nach einem der Ansprüche 7 bis 10, wobei die Kondensatoranordnung ein zusammengefasster Kondensator ist; oder ein Spalt zwischen dem Anpassungsnetzwerk (42) und dem Strahlungsabschnitt (44) bereitgestellt ist und der Spalt eine Kondensatoranordnung ist, die eine verteilte Kapazitätscharakteristik aufweist.

12. Endgeräteeinrichtung nach einem der Ansprüche 7 bis 11, wobei der Strahlungsabschnitt (44) ein Mikrostreifen auf einer Leiterplatte der Endgeräteeinrichtung ist; oder die Endgeräteeinrichtung ein Metallstück einer vorderen Abdeckung umfasst und der Strahlungsabschnitt (44) ein Bereich des Metallstücks der vorderen Abdeckung ist; oder das Gehäuse einen Metallrahmen umfasst und der Strahlungsabschnitt (44) ein Teil des Metallrahmens ist, oder die Endgeräteeinrichtung eine hintere Metallabdeckung umfasst und der Strahlungsabschnitt (44) ein Teil der hinteren Metallabdeckung ist.

## Revendications

1. Antenne à bandes multiples comprenant un point d'alimentation (41), un réseau d'adaptation (42), un ensemble de condensateurs (43), une partie de rayonnement (44) et une partie de mise à la masse (45), dans laquelle
le point d'alimentation (41), le réseau d'adaptation (42), l'ensemble de condensateurs (43), la partie de rayonnement (44) et la partie de mise à la masse (45) sont connectés en séquence ; et
le réseau d'adaptation (42) comprend au moins un inducteur connecté en série et un condensateur ou inducteur mis à la masse, la partie de mise à la masse (45) est connectée électriquement à un plan de masse (46), un premier circuit résonant est formé du point d'alimentation à la partie de mise à la masse, le premier circuit résonant génère une première fréquence de résonance et une deuxième fréquence de résonance, la première fréquence de résonance est utilisée dans un mode composite droit/gauche CRLH (composite right/left hand) et la deuxième fréquence de résonance est utilisée dans un mode à boucle d'une demie longueur d'onde ;
dans laquelle un réseau de filtrage (61) est en outre compris entre la partie de rayonnement (44) et la partie de mise à la masse (45), dans laquelle le réseau de filtrage (61) est un réseau de filtrage à arrêt de bande LC parallèle ; et un second circuit résonant est formé à partir d'une alimentation de la partie de mise à la masse, le second circuit résonant génère une troisième fréquence de résonance, une quatrième fréquence de résonance et une cinquième fréquence de résonance, la troisième fréquence de résonance et la cinquième fréquence de résonance sont utilisées dans le mode CRLH, et la quatrième fréquence de résonance est utilisée dans le mode à boucle d'une demie longueur d'onde.

2. Antenne à bandes multiples selon la revendication 1, dans laquelle le réseau de filtrage (61) comprend un premier inducteur (62) et un premier condensateur (63) qui sont connectés en parallèle.

3. Antenne à bandes multiples selon la revendication 1 ou 2, dans laquelle le réseau d'adaptation (42) comprend un deuxième inducteur (51) connecté en série et un deuxième condensateur mis à la masse (52), ou le réseau d'adaptation (42) comprend un deuxième inducteur (51) connecté en série, un deuxième condensateur (52) mis à la masse, et un troisième condensateur mis à la masse (53), ou bien le réseau d'adaptation (42) comprend un deuxième inducteur (51) connecté en série et un troisième inducteur (54) mis à la masse, ou le réseau d'adaptation (42) comprend un deuxième inducteur (51), un quatrième condensateur (55) connecté en série et un troisième inducteur (54) mis à la masse.

4. Antenne à bandes multiples selon l'une quelconque des revendications 1 à 3, dans laquelle, dans le réseau d'adaptation (42), une valeur d'inductance d'un inducteur connecté en série et une valeur de capacité d'un condensateur connecté en parallèle ou une valeur d'inductance d'un inducteur sont inversement proportionnelles à la deuxième fréquence de résonance.

5. Antenne à bandes multiples selon l'une quelconque des revendications 1 à 4, dans laquelle l'ensemble de condensateurs est un condensateur localisé ; ou un espace est prévu entre le réseau d'adaptation (42) et la partie de rayonnement (44), et l'espace est un ensemble de condensateurs présentant une caractéristique de capacité distribuée.

6. Antenne à bandes multiples selon l'une quelconque des revendications 1 à 5, dans laquelle la partie de rayonnement (44) est une microbande sur une carte de circuit imprimé d'un dispositif terminal ; ou la partie de rayonnement (44) est une section d'une pièce métallique d'une couverture avant d'un dispositif terminal ; ou la partie de rayonnement (44) est une section d'un cadre métallique d'un dispositif terminal ; ou la partie de rayonnement (44) fait partie d'une couverture arrière en métal d'un dispositif terminal.

7. Dispositif terminal comprenant : un boîtier (81), un circuit de traitement en bande de base (82), un circuit de mélange de fréquences (83), un circuit à fréquence radio d'alimentation (47) et une antenne à bandes multiples (84), dans laquelle le circuit de traitement en bande de base (82), le circuit de mélange de fréquences (83), le circuit à fréquence radio d'alimentation (47) et l'antenne à bandes multiples (84) sont situés à l'intérieur du boîtier (81), le circuit de traitement en bande de base (82), le circuit de mélange de fréquence (83) et le circuit à fréquence radio d'alimentation (47) sont connectés, et l'antenne à bandes multiples (84) comprend :
un point d'alimentation (41), un réseau d'adaptation (42), un ensemble de condensateurs (43), une partie de rayonnement (44) et une partie de mise à la masse (45), dans lequel
le point d'alimentation (41), le réseau d'adaptation (42), l'ensemble de condensateurs (43), la partie de rayonnement (44) et la partie de mise à la masse (45) sont connectés en séquence ; et
le réseau d'adaptation (42) comprend au moins un inducteur connecté en série et un condensateur ou inducteur mis à la masse, la partie de mise à la masse (45) est connectée électriquement à un plan de masse (46), un premier circuit résonant est formé du point d'alimentation à la partie de mise à la masse, le premier circuit résonant génère une première fréquence de résonance et une deuxième fréquence de résonance, la première fréquence de résonance est utilisée dans un mode composite droit/gauche CRLH et la deuxième fréquence de résonance est utilisée dans un mode à boucle d'une demie longueur d'onde ;
dans laquelle un réseau de filtrage (61) est en outre compris entre la partie de rayonnement (44) et la partie de mise à la masse (45), dans laquelle le réseau de filtrage est un réseau de filtrage à arrêt de bande LC parallèle ; et
un second circuit résonant est formé à partir d'une alimentation de la partie de mise à la masse (45), le second circuit résonant génère une troisième fréquence de résonance, une quatrième fréquence de résonance et une cinquième fréquence de résonance, la troisième fréquence de résonance et la cinquième fréquence de résonance sont utilisées dans le mode CRLH, et la quatrième fréquence de résonance est utilisée dans le mode à boucle d'une demie longueur d'onde.

8. Dispositif terminal selon la revendication 7, dans lequel le réseau de filtrage (61) comprend un premier inducteur (62) et un premier condensateur (63) qui sont connectés en parallèle.

9. Dispositif terminal selon la revendication 7 ou 8, dans lequel le réseau d'adaptation comprend un deuxième inducteur (51) connecté en série et un deuxième condensateur mis à la masse (52), ou le réseau d'adaptation (42) comprend un deuxième inducteur (51) connecté en série, un deuxième condensateur (52) mis à la masse, et un troisième condensateur mis à la masse (53), ou le réseau d'adaptation (42) comprend un deuxième inducteur (51) connecté en série et un troisième inducteur (54) mis à la masse, ou le réseau d'adaptation (42) comprend un deuxième inducteur (51), un quatrième condensateur (55) connecté en série et un troisième inducteur (54) mis à la masse.

10. Dispositif terminal selon l'une quelconque des revendications 7 à 9, dans lequel, dans le réseau d'adaptation (42), une valeur d'inductance d'un inducteur connecté en série et une valeur de capacité d'un condensateur connecté en parallèle ou une valeur d'inductance d'un inducteur sont inversement proportionnelles à la deuxième fréquence de résonance.

11. Dispositif terminal selon l'une quelconque des revendications 7 à 10, dans lequel l'ensemble de condensateurs est un condensateur localisé ; ou un espace est prévu entre le réseau d'adaptation (42) et la partie de rayonnement (44), et l'espace est un ensemble de condensateurs présentant une caractéristique de capacité distribuée.

12. Dispositif terminal selon l'une quelconque des revendications 7 à 11, dans lequel la partie de rayonnement (44) est une microbande sur une carte de circuit imprimé du dispositif terminal ; ou le dispositif terminal comprend une pièce métallique d'une couverture avant et la partie de rayonnement (44) est une section de la pièce métallique de la couverture avant ; ou le boîtier comprend un cadre métallique, et la partie de rayonnement (44) est une section du cadre métallique ; ou le dispositif terminal comprend une couverture arrière en métal et la partie de rayonnement (44) est une partie section de la couverture arrière en métal.
